# EUROPÄISCHE PATENTANMELDUNG

(11) **EP 3 285 048 A1**
(43) Veröffentlichungstag der Anmeldung: **21.02.2018**
(21) Anmeldenummer: 17185843.4
(22) Anmeldetag: 11.08.2017
(51) Int. Cl.: G01F 1/684, G01F 1/688

(54) **VERFAHREN UND SENSORVORRICHTUNG ZUR BESTIMMUNG DER TEMPERATUR EINES MEDIUMS UND DER DURCHFLUSSMENGE DES MEDIUMS DURCH EINEN STRÖMUNGSQUERSCHNITT SOWIE DEREN VERWENDUNG**

(30) Priorität: 18.08.2016 DE 102016115326
(71) Anmelder: REHAU AG + Co, 95111 Rehau (DE)
(72) Erfinder: POMMER, Willi, 90427 Nürnberg (DE)

(57) **Zusammenfassung**

Die vorliegende Erfindung bezieht sich auf ein Verfahren zur Bestimmung der Temperatur eines Mediums und der Durchflussmenge des Mediums durch einen Strömungsquerschnitt unter Verwendung einer Sensorvorrichtung (10), die eine Aufnahme (20) aus einem thermisch gut leitfähigen Material, einen Temperatursensor (30), der in einem Abschnitt (22) der Aufnahme (20) angeordnet ist und von der Aufnahme (20) umgeben ist, und ein Heizelement (40), das in der Aufnahme (20) angeordnet und von der Aufnahme (20) umgeben ist, umfasst, wobei das Verfahren die folgenden Stufen umfasst:
(i) Anordnen der Sensorvorrichtung (10) in dem Medium;
(ii) Messen der Temperatur des Mediums durch den Temperatursensor (30);
(iii) Erhöhen der Temperatur der Aufnahme (20) mittels Abgabe einer vorgegebenen Menge an thermischer Energie an die Aufnahme (20) durch das Heizelement (40);
(iv) Messen des zeitlichen Verlaufs der Temperatur der Aufnahme (20) durch den Temperatursensor (30); und
(v) Ermitteln der Durchflussmenge des Mediums durch Vergleich des in Stufe (iv) gemessenen zeitlichen Temperaturverlaufs mit Referenztemperaturverläufen, die der in Stufe (ii) gemessenen Mediumtemperatur zugeordnet sind.

Darüber hinaus bezieht sich die vorliegende Erfindung auch auf eine Sensorrichtung (10) zur Verwendung in dem erfindungsgemäßen Verfahren und die Verwendung des erfindungsgemäßen Verfahrens oder der einer erfindungsgemäßen Sensorvorrichtung (10) zur Steuerung eines Heiz- und/oder Kühlungssystems, insbesondere eines Flächenheiz- und/oder Flächenkühlungssystems.

## Beschreibung

Die vorliegende Erfindung betrifft ein Verfahren und eine Sensorvorrichtung zur Bestimmung der Temperatur eines Mediums und der Durchflussmenge des Mediums durch einen Strömungsquerschnitt sowie deren Verwendung zur Steuerung eines Heiz- und/oder Kühlungssystems, insbesondere eines Flächenheiz- und/oder Flächenkühlungssystems.

Derartige Verfahren zur Bestimmung der Temperatur eines Mediums und der Durchflussmenge des Mediums durch einen Strömungsquerschnitt sind im Stand der Technik bekannt. Beispielsweise kann die quantitative Erfassung der Durchflussmenge sowie der Temperatur eines strömenden Mediums zur Weitergabe an ein elektronisches Gerät zur Erfassung oder Darstellung der Daten oder zum Regeln/Steuern durch zwei getrennte Sensoren erfolgen, wobei einer zur Temperaturmessung und einer zur Messung der Durchflussmenge des Mediums durch einen Strömungsquerschnitt eingesetzt werden. Zur Messung der Durchflussmenge kommen je nach Anwendungsfall Geräte wie Turbinen-Durchflussmesser, Ultraschall-Durchflussmesser, magnetisch induktive Durchflussmesser oder Durchflussmesser nach dem Vortex-Prinzip zum Einsatz, wobei für die Temperaturmessung in Kombination mit diesen Durchflussmessverfahren separate Temperatursensoren verwendet werden.

Darüber hinaus ist ein Verfahren zur Bestimmung des Massedurchflusses bzw. der Durchflussmenge bekannt, bei der zwei Temperatursensoren sowie ein Heizelement verwendet werden. Das Heizelement erwärmt den ersten Temperatursensor, so dass sich eine Temperaturdifferenz zum zweiten Temperatursensor einstellt. Je nach der Menge des vorbeiströmenden Mediums wird der erste Sensor mehr oder weniger abgekühlt. In der weiteren Vorgehensweise kann entweder (a) die Variation der Temperaturdifferenz selbst ausgewertet werden oder (b) es wird durch eine Regelelektronik die Leistungsabgabe des Heizelements so eingestellt, dass die Temperaturdifferenz konstant gehalten wird. Im Fall (a) ist die ermittelte Temperaturdifferenz, im Fall (b) die Menge der in das Heizelelement eingespeisten Energie proportional zum Massenstrom. Bei diesem Messprinzip kann das Signal des zweiten Temperatursensors für die Messung der Medientemperatur verwendet werden.

Die genannten Messverfahren haben den Nachteil, dass sie aufgrund des Einsatzes von zwei separaten Sensoren kostenintensiv sind.

An dieser Stelle setzt die vorliegende Erfindung ein, der die Aufgabe zugrunde liegt, eine Sensorvorrichtung und ein Verfahren zur Bestimmung der Temperatur eines Mediums und der Durchflussmenge des Mediums durch einen Strömungsquerschnitt zur Verfügung zu stellen, das die Nachteile des Stands der Technik überwindet. Insbesondere sollen die erfindungsgemäße Sensorvorrichtung und das erfindungsgemäße Verfahren einfach und kostengünstig einsetzbar sein.

Diese und andere Aufgaben werden durch ein Verfahren mit den Merkmalen des Anspruches 1 bzw. eine Sensorvorrichtung mit den Merkmalen des Anspruches 7 bzw. die Verwendung mit den Merkmalen des Anspruches 10 gelöst. Vorteilhafte Ausführungsformen der erfindungsgemäßen Sensorvorrichtung bzw. des erfindungsgemäßen Verfahrens sind in den abhängigen Ansprüchen beschrieben.

Gemäß der vorliegenden Erfindung wurde erkannt, dass die Temperatur eines Mediums und die Durchflussmenge des Mediums durch einen Strömungsquerschnitt auch unter Verwendung lediglich eines Temperatursensors ermittelt werden können. Dieser Temperatursensor misst zum einen die Temperatur des strömenden oder stehenden Mediums und dessen Signalverlauf. Zum anderen erlaubt der zeitliche Verlauf der gemessen Temperatur nach Zufuhr einer vorgegebenen Energiemenge an einen Prüfkörper zusätzlich einen Rückschluss auf die Strömungsgeschwindigkeit des vorbeifließenden Mediums und damit auf die Durchflussmenge des Mediums durch einen Strömungsquerschnitt. Dabei wird der Effekt ausgenutzt, dass ein in ein Medium eintauchender Körper, der eine zum Medium unterschiedliche Temperatur aufweist, sich bei unbewegtem bzw. stehendem Medium langsamer an die Temperatur des umgebenden Mediums anpasst als bei bewegtem bzw. strömenden Medium. Die erfindungsgemäße Sensorvorrichtung ist daher so aufgebaut, dass in eine Aufnahme aus einem gut wärmeleitfähigem Material ein Temperatursensor und ein Heizelement eingebracht sind, wobei sich das Heizelement vorzugsweise in einem gewissen Abstand zum Temperatursensor in dem gleichen wärmeleitfähigem Material befindet. Mit der erfindungsgemäßen Sensorvorrichtung wird nun der Sensor in das Medium eingebracht und zunächst die Temperatur des Mediums ermittelt. Daraufhin wird der Aufnahme durch das Heizelement eine vorgegebene Energiemenge zugeführt, durch die die Temperatur der erfindungsgemäßen Sensorvorrichtung erhöht wird, was der Temperatursensor misst. Anschließend nähert sich die Temperatur der erfindungsgemäßen Sensorvorrichtung der Temperatur des umgebenden Mediums an. Der zeitliche Verlauf dieser Temperaturannährung ist für die Temperatur des umgebenden Mediums einerseits sowie für die Fließgeschwindigkeit des vorbeiströmenden Mediums andererseits charakteristisch, so dass sich durch einen Vergleich des gemessenen zeitlichen Temperaturverlaufs mit bereits vorhandenen Referenztemperaturverläufen für die gemessene Mediumtemperatur und bekannte Fließgeschwindigkeiten die in dem Strömungsquerschnitt herrschende Fließgeschwindigkeit ermitteln lässt.

Dementsprechend stellt die vorliegende Erfindung ein Verfahren zur Bestimmung der Temperatur eines Mediums und der Durchflussmenge des Mediums durch einen Strömungsquerschnitt unter Verwendung einer Sensorvorrichtung, die eine Aufnahme aus einem thermisch gut leitfähigen Material, einen Temperatursensor, der in einem Abschnitt der Aufnahme angeordnet ist und von der Aufnahme umgeben ist, und ein Heizelement, das in der Aufnahme angeordnet und von der Aufnahme umgeben ist, umfasst, zur Verfügung, wobei das Verfahren die folgenden Stufen umfasst:
(i) Anordnen der Sensorvorrichtung in dem Medium;
(ii) Messen der Temperatur des Mediums durch den Temperatursensor;
(iii) Erhöhen der Temperatur der Aufnahme mittels Abgabe einer vorgegebenen Menge an thermischer Energie an die Aufnahme durch das Heizelement;
(iv) Messen des zeitlichen Verlaufs der Temperatur der Aufnahme durch den Temperatursensor; und
(v) Ermitteln der Durchflussmenge des Mediums durch Vergleich des in Stufe (iv) gemessenen zeitlichen Temperaturverlaufs mit Referenztemperaturverläufen, die der in Stufe (ii) gemessenen Mediumtemperatur zugeordnet sind.

Darüber hinaus stellt die vorliegende Erfindung eine Sensorvorrichtung zur Bestimmung der Temperatur eines Mediums und der Durchflussmenge des Mediums durch einen Strömungsquerschnitt zur Verfügung, die eine Aufnahme aus einem thermisch gut leitfähigen Material, einen Temperatursensor, der in einem Abschnitt der Aufnahme angeordnet ist und von der Aufnahme umgeben ist, und ein Heizelement, das beabstandet von dem Temperatursensor in der Aufnahme angeordnet und von der Aufnahme umgeben ist, umfasst. Letztlich stellt die vorliegende Erfindung auch die Verwendung des erfindungsgemäßen Verfahrens oder einer erfindungsgemäßen Sensorvorrichtung zur Steuerung eines Heiz- und/oder Kühlungssystems, insbesondere eines Flächenheiz- und/oder Flächenkühlungssystems, zur Verfügung. Die ermittelten Werte für die Temperatur und die Durchflussmenge des Mediums können beispielsweise dann, wenn die Messung für ein Medium erfolgt, dass sich im Rücklauf eines Heiz-/Kühlkreises eines Heiz - und/oder Kühlsystems befindet, zusammen mit der Vorlauftemperatur des Heiz-/Kühlkreises dazu genutzt werden, Fehler in der hydraulischen Abstimmung der Anlage zu erkennen und eine Kompensation der Strömungsmengen zu veranlassen, das Aufheizverhalten zu verbessern oder eine gewünschte Mindesttemperatur des Verbrauchers einzuhalten.

Wie hierin verwendet bedeutet der Begriff "thermisch gut leitfähiges Material", dass das betreffende Material einen Wärmeleitfähigkeitskoeffizienten bzw. Wärmeleitkoeffizienten von insbesondere mindestens 10 W/(m*K), vorzugsweise mindestens 25 W/(m*K) und besonders bevorzugt mindestens 50 W/(m*K) besitzt.

Hinsichtlich des erfindungsgemäßen Verfahrens kann es vorteilhaft sein, wenn die in Stufe (v) eingesetzten Referenztemperaturverläufe bei ruhendem Medium gemessen wurden. Auf diese Weise ist gewährleistet, dass das erfindungsgemäße Verfahren mit demselben Sensor durchführbar ist, weil ggf.auf den Sensor einwirkende Alterungsvorgänge oder Ablagerungsvorgänge durch Referenztemperaturmessungen bei ruhendem Medium kompensiert werden können.

Es kann auch vorteilhaft sein, wenn das Anordnen der Sensorvorrichtung in Stufe (i) derart erfolgt, dass der Abschnitt der Aufnahme, in dem der Temperatursensor angeordnet ist, entgegengesetzt zur Strömungsrichtung des Mediums gerichtet ist. Auf diese Weise ist gewährleistet, dass die in Stufe (iii) zugeführte Wärmemenge durch die höhere Beeinflussung durch die Strömung des umgebenden Mediums auch in hohem Maße zu einer durch den Temperatursensor detektierbaren Temperaturerhöhung führt.

Es kann sich auch als nützlich erweisen, wenn die Sensorvorrichtung weiter eine thermische Isolierung umfasst, in die die Aufnahme abschnittsweise aufgenommen ist, wobei der Abschnitt der Aufnahme, in dem der Temperatursensor angeordnet ist, zumindest teilweise freiliegt. Die thermische Isolierung der erfindungsgemäßen Sensorrichtung sorgt daür, dass die durch das Heizelement zugeführte Wärmeenergie gezielt zum Temperatursensor gelangt. Dadurch wird die Zuverlässigkeit insbesondere der Messung der Durchflussmenge erhöht. Dabei ist es günstig, wenn die thermische Isolierung ein Material umfasst, das einen Wärmeleitfähigkeitskoeffizienten bzw. Wärmeleitkoeffizienten von insbesondere höchstens 1 W/(m*K), vorzugsweise höchstens 0,25 W/(m*K) und besonders bevorzugt höchstens 0,1 W/(m*K) besitzt.

Es kann sich als hilfreich herausstellen, wenn die Sensorvorrichtung weiter eine Ummantelung aus einem thermisch gut leitfähigen Material aufweist, die die Aufnahme und/oder die thermische Isolierung ummantelt. Dadurch wird es ermöglicht, den Wärmestrom in der erfindungsgemäßen Sensorvorrichtung, der sich nach Auslösen des Heizimpulses über die Aufnahme und den Bereich, in den der Temperatursensor eingebracht ist, hin zu dem umgebenden Medium einstellt, zu steigern. Dies resultiert in einem stärker ausgeprägten Temperatureffekt, der durch den Temperatursensor detektiert werden kann und dadurch zu einer verbesserten Auswertbarkeit der Messung.

Es kann sich auch als nützlich erweisen, wenn das Heizelement beabstandet von dem Temperatursensor in der Aufnahme angeordnet ist. Auf diese Weise ist es möglich, einen zeitlichen Versatz zwischen Beheizen durch das Heizelement und Detektion durch den Temperatursensor zu erzielen.

Es kann sich als hilfreich herausstellen, wenn das Heizelement und der Temperatursensor ein einziges Bauteil ist. Beispielsweise wäre hier ein Draht als Temperatursensor denkbar, der dann über Zufuhr von elektrischer Energie beheizbar wäre. Dadurch wird die Beheizung des Heizelements unmittelbar ablesbar. Auf diese Weise sind weniger Anschlüsse für die erfindungsgemäße Sensorvorrichtung erforderlich, was eine weitere Vereinfachung darstellt.

Die erfindungsgemäße Sensorvorrichtung sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Die vorliegende Erfindung wird im Folgenden unter Bezugnahme auf bevorzugte Ausführungsformen des erfindungsgemäßen Verfahrens im Detail beschrieben, wobei die beigefügten Zeichnungen die Erfindung leichter verständlich machen sollen. Dabei versteht es sich, dass die dargestellten Ausführungsformen die vorliegende Erfindung exemplarisch veranschaulichen und nicht einschränken sollen. Es zeigen:
- Fig. 1: eine Sensorvorrichtung gemäß einer Ausführungsform der vorliegenden Erfindung in einer schematischen Querschnittsdarstellung;
- Fig. 2: eine Sensorvorrichtung gemäß einer weiteren Ausführungsform der vorliegenden Erfindung in einer schematischen Querschnittsdarstellung;
- Fig. 3: eine Sensorvorrichtung gemäß einer weiteren Ausführungsform der vorliegenden Erfindung in einer schematischen Querschnittsdarstellung;
- Fig. 4: eine schematische Querschnittsdarstellung der in Fig. 2 gezeigten Sensorvorrichtung in einem strömenden Medium; und
- Fig. 5: die durch eine erfindungsgemäße Sensorvorrichtung gemessenen zeitlichen Temperaturverläufe bei ruhendem Medium (gestrichelte Linie) und bei bewegtem Medium (durchgezogene Linie).

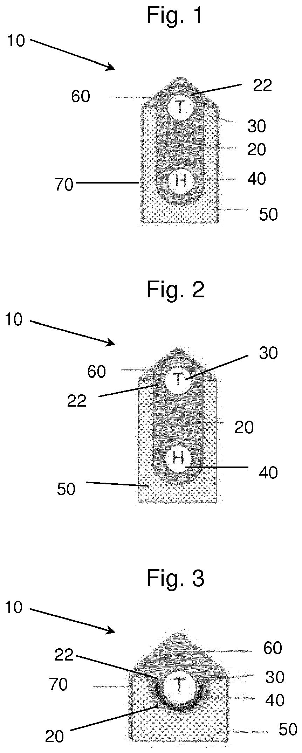

In Fig. 1 ist eine Ausführungsform einer erfindungsgemäßen Sensorvorrichtung 10 zur Bestimmung der Temperatur eines Mediums und der Durchflussmenge des Mediums durch einen Strömungsquerschnitt in einer schematischen Querschnittsdarstellung gezeigt. Die erfindungsgemäße Sensorvorrichtung 10 umfasst eine Aufnahme 20 aus einem thermisch gut leitfähigen Material, beispielsweise aus Stahl mit einem Wärmeleitfähigkeitskoeffizienten von etwa 55 W/(m*K). In einem Abschnitt 22 der Aufnahme 20 ist ein Temperatursensor 30 aufgenommen. Der Temperatursensor 30 ist dabei vollständig vom thermisch gut leitfähigen Material der Aufnahme 20 umgeben. Von dem Temperatursensor 30 beabstandet ist in der Aufnahme 20 weiter ein Heizelement 40, vorzugsweise eine Heizwendel, ein Heizdraht oder ein anderes Widerstandsheizelement, aufgenommen, das in der in Fig. 1 gezeigten Ausführungsform ebenfalls vollständig vom thermisch gut leitfähigen Material der Aufnahme 20 umgeben und dadurch mit dem Temperatursensor 30 thermisch leitend verbunden ist.

Die Aufnahme 20 ist teilweise von einer thermischen Isolierung 50, beispielsweise aus Polytetrafluorethylen mit einem Wärmeleitfähigkeitskoeffizienten von etwa 0,25 W/(m*K) umhüllt. Dabei ragt der den Temperatursensor 30 umgebende Abschnitt 22 der Aufnahme 20 teilweise aus der thermischen Isolierung 50. So ist gewährleistet, dass der Hauptfluss der Energie den Abschnitt 22 der Aufnahme 20, in den der Temperatursensor 30 eingebracht ist, passiert. Die überragenden Teile der Aufnahme 20 sind in einer Spitze 60 aus einem thermisch gut leitfähigen Material, beispielsweise aus Stahl mit einem Wärmeleitfähigkeitskoeffizienten von etwa 55 W/(m*K) aufgenommen. Die Spitze sorgt dafür, dass die erfindungsgemäße Sensorvorrichtung 10 im Einsatz gleichmäßig von Medium umströmt wird und keine Abschnitte an der erfindungsgemäßen Sensorvorrichtung 10 vorhanden sind, in denen sich das Medium stauen kann. An ihrer Außenseite ist die thermische Isolierung 50 von einer dünnen Schicht 70 aus einem thermisch gut leitfähigen Material, beispielsweise Stahl mit einem Wärmeleitfähigkeitskoeffizienten von etwa 55 W/(m*K), umgeben.

Die erfindungsgemäßen Sensorvorrichtungen 10 gemäß den Figuren 2 und 3 sind im Wesentlichen identisch zu der erfindungsgemäßen Sensorvorrichtung 10 gemäß Figur 1 mit der Ausnahme, dass die thermische Isolierung 50 der erfindungsgemäßen Sensorvorrichtung 10 gemäß Figur 2 nicht von einer dünnen Schicht 70 aus einem thermisch gut leitfähigen Material umgeben ist und die insgesamt kürzer ausgebildete erfindungsgemäße Sensorvorrichtung 10 gemäß Figur 3 ein Heizelement 40 umfasst, das bogenförmig ausgebildet ist und in kurzem Abstand zum Temperatursensor 30 diesen abschnittsweise umgebend angeordnet ist. Um Wiederholungen zu vermeiden, wird auf die vorangegangene Beschreibung Bezug genommen, und es werden für identische Bauteile dieselben Bezugszeichen verwendet. Die in Bezug auf Figur 1 getätigten Ausführungen gelten in Bezug auf die Ausführungsformen gemäß Figuren 2 und 3 entsprechend.

In alternativen Ausführungsformen der erfindungsgemäßen Sensorvorrichtung 10 können der Temperatursensor 30 und das Heizelement 40 auch eine Einheit bilden. In diesem Fall wird der Temperatursensor 30 selbst durch Einbringen elektrischer Energie über einen vorgegebenen Zeitraum definiert erwärmt und die darauf folgende Abkühlung kann zur Bestimmung der Temperatur und Durchflussmenge eines Mediums durch einen Strömungsquerschnitt ausgewertet werden.

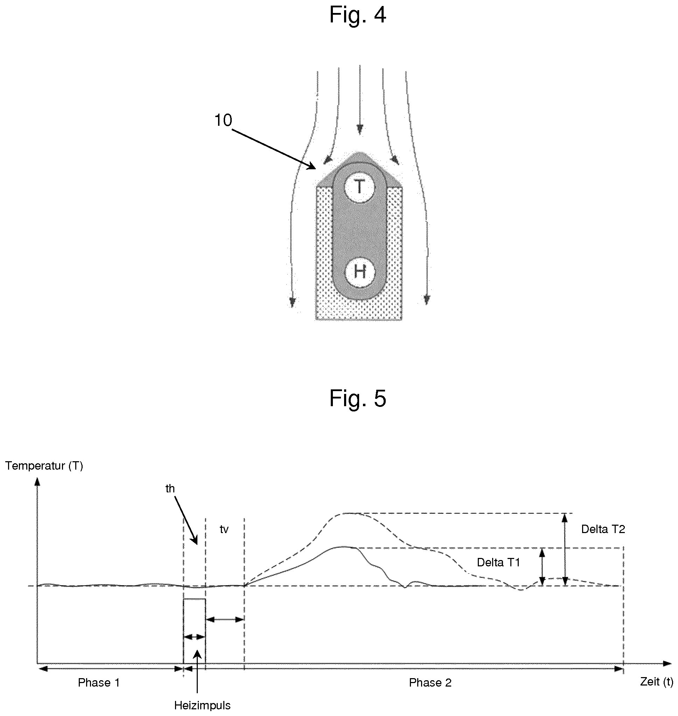

Zur erfindungsgemäßen Durchführung der Bestimmung der Temperatur und Durchflussmenge eines Mediums durch einen Strömungsquerschnitt wird zunächst die erfindungsgemäße Sensorvorrichtung 10 in dem Medium angeordnet. Bevorzugt erfolgt das Anordnen der erfindungsgemäße Sensorvorrichtung 10 dabei so, dass der Abschnitt 22 der Aufnahme 20, in dem der Temperatursensor 30 angeordnet ist, entgegengesetzt zur Strömungsrichtung des Mediums gerichtet ist (vgl. Fig. 4). Auf diese Weise ist gewährleistet, dass die in Stufe (iii) zugeführte Wärmemenge auch in hohem Maße zu einer durch den Temperatursensor 30 detektierbaren Temperaturerhöhung führt. Darüber hinaus wird der Einfluss der Strömungsgeschwindigkeit des Mediums auf die Temperaturerhöhung bei gegebener Wärmeenergiemenge erhöht.

Alternativ dazu kann die erfindungsgemäße Sensorvorrichtung 10 auch so angeordnet sein, dass der Abschnitt 22 der Aufnahme 20, in dem der Temperatursensor 30 angeordnet ist, in Strömungsrichtung des Mediums angeordnet ist.

Daraufhin misst der Temperatursensor 30 die Temperatur des Mediums (Phase 1; vgl. Fig. 5). Die gemessene Temperatur wird an eine Steuereinheit übermittelt und durch diese gespeichert.

Nach Abschluss dieses Schritts wird nun der Aufnahme 20 der erfindungsgemäßen Sensorvorrichtung 10 über das Heizelement 40 über einen vorgegebenen Zeitraum (th; vgl. Fig. 5) eine vorgegebene Leistung und damit eine definierte Gesamtenergie zugeführt. Dadurch wird die Temperatur der Aufnahme 20 erhöht. Aufgrund der thermischen Isolierung 50 passiert der Hauptfluss der Energie den Abschnitt 22 der Aufnahme 20, in den der Temperatursensor 30 eingebracht ist.

Diese Lenkung des hauptsächlichen Energieflusses vom Heizelement 40 über die Einbauposition des Temperatursensors 30 hin zum umgebenden Medium, sorgt dabei für eine große Temperaturerhöhung des Abschnitts 22 der Aufnahme 20, die durch den Temperatursensor 30 detektiert werden kann, wodurch die Messgenauigkeit erhöht wird.

Die Temperaturerhöhung wird ggf. zeitlich verzögert (zeitlicher Versatz tv; vgl. Fig. 5) durch den Temperatursensor 30 gemessen und an die Steuereinheit übermittelt. Dieser evtl. auftretende zeitliche Versatz zwischen dem Zeitintervall der Leistungsabgabe vom Heizelement 40 an die Aufnahme 20 der erfindungsgemäßen Sensorvorrichtung 10 resultiert aus dem vorzugsweise vorhandenem Abstand zwischen dem Heizelement 40 und dem Temperatursensor 30, die über das thermisch gut leitende Material der Aufnahme 20 miteinander thermisch leitend verbunden sind.

Da die Temperatur der Aufnahme 20 der erfindungsgemäßen Sensorvorrichtung 10 sich langsam wieder der Temperatur des diese umgebenden Mediums annähert, kann durch den Temperatursensor 30 der zeitliche Verlauf dieser Temperaturabnahme des Abschnitts 22 der Aufnahme 20 gemessen, an die Steuereinheit übermittelt und durch diese gespeichert werden.

Der vom Temperatursensor 30 erfasste Temperaturverlauf ist bei konstanter, durch das Heizelement 30 eingebrachter Energiemenge für die Temperatur des die Aufnahme 20 umgebenden Mediums einerseits sowie für die Fließgeschwindigkeit des vorbeiströmenden Mediums, und damit für die Durchflussmenge des Mediums durch den jeweiligen Strömungsquerschnitt, charakteristisch. Daher lässt sich aus diesem zeitlichen Verlauf der Temperaturabnahme der Aufnahme 20 durch Vergleichen mit Referenztemperaturverläufen, die bei der vorher gemessenen Mediumtemperatur gemessen und dieser zugeordnet sind, die Durchflussmenge des Mediums durch den Strömungsquerschnitt, in den die erfindungsgemäße Sensorvorrichtung 10 eingebracht worden ist, ermitteln.

Die Lenkung des hauptsächlichen Energieflusses vom Heizelement über die Einbauposition des Sensors hin zum umgebenden Medium, beeinflusst durch die Gestaltung des Probekörpers, sorgt dabei - um die Messgenauigkeit zu steigern - für einen möglichst großen Hub des auszuwertenden Signals.

Die Ermittlung der Referenztemperaturverläufe kann bei ruhendem Medium erfolgen. Hierzu wird der Durchfluss beispielsweise durch Schließen eines Ventils gestoppt. In diesem Zustand kann dann durch eine Reihe von Messungen bei verschiedenen Medientemperaturen eine Referenzkurve des Temperaturanstiegs und Temperaturabfalls durch den Temperatursensor 30 ermittelt, an die Steuereinheit übermittelt und durch diese abgespeichert werden. Die Ermittlung der Referenztemperaturverläufe kann in zeitlichen Abständen erneut durchgeführt werden, so dass der Einfluss von Ablagerungen oder sonstigen Veränderungen der Oberfläche der Aufnahme 20 der erfindungsgemäßen Sensorvorrichtung 10 kompensiert werden kann.

In Abhängigkeit von der vorliegenden, durch den Temperatursensor 30 gemessenen Medientemperatur (ermittelt in Phase 1, vgl. Fig. 5) kann dann der ermittelte Temperaturverlauf (Phase 2; vgl. Fig. 5) mit dem zu dieser Medientemperatur gehörenden Referenztemperaturverlauf verglichen werden und daraus die Geschwindigkeit des an der erfindungsgemäßen Sensorvorrichtung 10 vorbeiströmenden Mediums als Maß für die Durchflussmenge durch den Strömungsquerschnitt bestimmt werden. Bei keinem Durchfluss (Fig. 5, gestrichelte Linie) oder bei einer geringen Durchflussmenge erfolgt die Wärmeabgabe der Aufnahme 20 an das umgebende Medium langsamer als bei bewegtem Medium (Fig. 5, durchgezogene Linie). Daraus ergibt sich ein höherer Anstieg der Temperatur (Fig. 5, Delta T2) und eine flachere Abklingkurve als bei bewegtem Medium (Fig. 5, Delta T1).

Die vorliegende Erfindung wurde unter Bezugnahme auf die in den Figuren gezeigten Ausführungsformen der vorliegenden Erfindung im Detail beschrieben. Es versteht sich, dass die vorliegende Erfindung nicht auf die gezeigten Ausführungsformen beschränkt ist, sondern sich der Umfang der vorliegenden Erfindung aus den Ansprüchen ergibt.

## Patentansprüche

1. Verfahren zur Bestimmung der Temperatur eines Mediums und der Durchflussmenge des Mediums durch einen Strömungsquerschnitt unter Verwendung einer Sensorvorrichtung (10), die eine Aufnahme (20) aus einem thermisch gut leitfähigen Material, einen Temperatursensor (30), der in einem Abschnitt (22) der Aufnahme (20) angeordnet ist und von der Aufnahme (20) umgeben ist, und ein Heizelement (40), das in der Aufnahme (20) angeordnet und von der Aufnahme (20) umgeben ist, umfasst, wobei das Verfahren die folgenden Stufen umfasst:
(i) Anordnen der Sensorvorrichtung (10) in dem Medium;
(ii) Messen der Temperatur des Mediums durch den Temperatursensor (30);
(iii) Erhöhen der Temperatur der Aufnahme (20) mittels Abgabe einer vorgegebenen Menge an thermischer Energie an die Aufnahme (20) durch das Heizelement (40);
(iv) Messen des zeitlichen Verlaufs der Temperatur der Aufnahme (20) durch den Temperatursensor (30); und
(v) Ermitteln der Durchflussmenge des Mediums durch Vergleich des in Stufe (iv) gemessenen zeitlichen Temperaturverlaufs mit Referenztemperaturverläufen, die der in Stufe (ii) gemessenen Mediumtemperatur zugeordnet sind.

2. Verfahren gemäß Anspruch 1, **dadurch gekennzeichnet, dass** die in Stufe (v) eingesetzten Referenztemperaturverläufe bei ruhendem Medium gemessen wurden.

3. Verfahren gemäß Anspruch 1 oder Anspruch 2, **dadurch gekennzeichnet, dass** die Sensorvorrichtung (10) weiter eine thermische Isolierung (50) umfasst, in die die Aufnahme (20) abschnittsweise aufgenommen ist, wobei der Abschnitt (22) der Aufnahme (20), in dem der Temperatursensor (30) angeordnet ist, zumindest teilweise freiliegt.

4. Verfahren gemäß einem der Ansprüche 1 bis 3, **dadurch gekennzeichnet, dass** die Sensorvorrichtung (10) weiter eine Ummantelung (60) aus einem thermisch gut leitfähigen Material umfasst, die die Aufnahme (20) und/oder die thermische Isolierung (50) ummantelt.

5. Verfahren gemäß einem der Ansprüche 1 bis 4 **dadurch gekennzeichnet, dass** das Heizelement (40) beabstandet von dem Temperatursensor (30) in der Aufnahme (20) angeordnet ist.

6. Verfahren gemäß einem der Ansprüche 1 bis 4 **dadurch gekennzeichnet, dass** das Heizelement (40) und der Temperatursensor (30) ein einziges Bauteil sind.

7. Sensorvorrichtung (10) zur Bestimmung der Temperatur eines Mediums und der Durchflussmenge des Mediums durch einen Strömungsquerschnitt, umfassend:
(i) eine Aufnahme (20) aus einem thermisch gut leitfähigen Material;
(ii) einen Temperatursensor (30), der in einem Abschnitt (22) der Aufnahme (20) angeordnet ist und von der Aufnahme (20) umgeben ist; und
(iii) ein Heizelement (40), das beabstandet von dem Temperatursensor (30) in der Aufnahme (20) angeordnet und von der Aufnahme (20) umgeben ist.

8. Sensorvorrichtung (10) gemäß Anspruch 7, **dadurch gekennzeichnet, dass** die Sensorvorrichtung (10) weiter eine thermische Isolierung (50) umfasst, in die die Aufnahme (20) abschnittsweise aufgenommen ist, wobei der Abschnitt (22) der Aufnahme (20), in dem der Temperatursensor (30) angeordnet ist, zumindest teilweise freiliegt.

9. Sensorvorrichtung (10) gemäß Anspruch 7 oder Anspruch 8, **dadurch gekennzeichnet, dass** die Sensorvorrichtung (10) weiter eine Ummantelung (60) aus einem thermisch gut leitfähigen Material umfasst, die die Aufnahme (20) und/oder die thermische Isolierung (50) ummantelt.

10. Verwendung eines Verfahrens gemäß einem der Ansprüche 1 bis 6 oder einer Sensorvorrichtung (10) gemäß einem der Ansprüche 7 bis 9 zur Steuerung eines Heiz- und/oder Kühlungssystems, insbesondere eines Flächenheiz- und/oder Flächenkühlungssystems.
